(19) **Europäisches Patentamt / European Patent Office / Office européen des brevets**

(11) **EP 4 084 309 A1**

(12) # EUROPEAN PATENT APPLICATION

(43) Date of publication:
**02.11.2022 Bulletin 2022/44**

(21) Application number: **21171182.5**

(22) Date of filing: **29.04.2021**

(51) International Patent Classification (IPC):
**H02M 1/12** *(2006.01)*      **H02M 7/23** *(2006.01)*
**H02M 7/5387** *(2007.01)*      **H02M 7/493** *(2007.01)*

(52) Cooperative Patent Classification (CPC):
**H02M 1/123; H02M 7/23; H02M 7/493;
H02M 7/53876**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Applied Micro Electronics "AME" B.V.
5633 AA Eindhoven (NL)**

(72) Inventors:
• **SCHELLEKENS, Johannes Maria**
  **5633 AA Eindhoven (NL)**
• **BOKMANS, Bart Franciscus Joseph**
  **5633 AA Eindhoven (NL)**
• **CLERMONTS, Franciscus Maria Henricus**
  **5633 AA Eindhoven (NL)**

(74) Representative: **V.O.
P.O. Box 87930
2508 DH Den Haag (NL)**

(54) ## ELIMINATION OF COMMON-MODE VOLTAGES FOR AC/DC CONVERTERS WITH INTERLEAVED SWITCHING

(57)      A three-phase AC/DC converter (100) is configured to convert power between a set of DC terminals (11p, 11n) and a set of AC terminals. Each AC terminal (12) is connected to an even number ("N") of in parallel connected inverter legs (La, Lb), providing an odd number of distinct voltage levels. Each inverter leg (La) comprises two switches (Qa, !Qa) connected in series between the DC terminals (11p, 11n). The connection to the AC terminal (12) is formed via a respective inductor (14a) connected to a central node (Na) between the two switches (Qa, !Qa) of the inverter leg (La). A controller (13) is configured to sequentially select respective combinations of switching states (+1,-1) for the two switches (Qa, !Qa) from a set of zero common-mode vectors (Vi .. $V_7$) whose distinct components, defined by the distinct voltage level for each of the AC terminals, add up to zero.

FIG 1B

**Description**

TECHNICAL FIELD AND BACKGROUND

The present disclosure relates to AC/DC converters, i.e. electrical devices or circuits that transform alternating current (AC) input into direct current (DC) output, or vice versa. The disclosure also relates to methods and machine-readable instructions for controlling AC/DC converters.

By the year 2030, the Renewable Energy Directive (2018/2001/EU) targets at least a 32% share of renewable energy, with a clause for possible upwards revision by 2023. In addition, the market share of fully-electric vehicles "EV" and plugin-hybrid electric-vehicles "PHEV" is increasing steadily. Electric vehicles are typically charged from the utility grid. As a result, growing attention is drawn towards more compact and efficient bidirectional AC/DC converters. To overcome the intermittent nature of sustainably energy, these converter can aid integration of renewable energy sources and improving grid stability by peak shaving and voltage control.

Active AC/DC converters may be able to comply with rigorous low-frequency current harmonic limits at the cost of high frequency noise. This high-frequency noise may cause conducted and radiated emissions. For example, conducted emission is measured with a line impedance stabilization network "LISN", and the limits in the 150kHz to 30MHz range for class A (Industrial) and class B (Household) appliances are defined in EN55022:2010. Passive low-pass filters employing inductors and capacitors can be used to attenuate the conducted emission of a system, however these filters take up a relatively large portion of overall system volume and cost.

Conducted emission can be split into a differential mode "DM" and common-mode "CM" component. For example, this can be modeled using a three-phase disturbance model. Typically the performance of a DM filter can be well predicted, and depending on the required attenuation, multistage LC-filters can be applied. Common-mode emissions are mainly determined by high-frequency currents in parasitic elements such as capacitances between semiconductors and the heatsink and between the heatsink and ground. Good design practices and filtering can mitigate conducted emissions. Another possibility is actively reducing the common-mode voltage for example by adding a fourth inverter leg as presented in a paper by Oriti et al [DOI: 10.1109/PESC. 1997.618066]. Alternatively, a series-connected multilevel converter in combination with a specific modulation scheme can be used, e.g. as seen with a Neutral-Point Clamped "NPC" converter in a paper by Ratnayake and Murai [DOI: 10.1109/PESC.1998.701910].

There is a yet need for further improvements in the alleviation of noise in AC/DC converters.

SUMMARY

As described herein, a modulation scheme is presented that alleviates the low-frequency common-mode component of a (bidirectional) three-phase AC/DC converter by making use of an even number of interleaved parallel inverter legs. Typically, each inverter leg comprises two switches connected in series between a set of DC terminals. The connection to the AC terminal can be formed via a central node between the two switches of the inverter leg. Respective combinations of switching states of the switches can be used determine a relation between a respective AC voltage on the AC terminal and respective DC voltages on the DC terminals. The converter comprises a controller configured to sequentially select respective combinations of switching states in accordance with time-dependent AC voltages to be applied to, or measured from, the respective AC terminals. By selecting the respective combinations of switching states from a set of zero common-mode vectors, noise can be alleviated as demonstrated in the detailed description below.

BRIEF DESCRIPTION OF DRAWINGS

These and other features, aspects, and advantages of the apparatus, systems and methods of the present disclosure will become better understood from the following description, appended claims, and accompanying drawing wherein:

FIG 1A illustrates a three phase AC/DC converter;
FIG 1B illustrates components and connections in an AC terminal of the converter;
FIG 2 illustrates a representation of possible switching states corresponding to different AC voltage vectors, in particular zero common-mode vectors;
FIG 3 illustrates (from top to bottom) a period of three-phase voltages divided in sectors, each sector divided in switching periods, each switching period divided in sub-periods, each sub-period defined by application of a respective zero common-mode vector;
FIG 4 illustrates a more detailed schematic of a three-phase AC/DC converter with two interleaved legs per phase;
FIG 5A illustrates vectors corresponding to possible switching states in a three-phase three-level converter;
FIG 5B illustrates a projection of zero common-mode and other voltage vectors in a three-phase three-level converter;

FIG 6 illustrates graphs of inductor currents during sector transitions;
FIG 7A illustrates a modulator implementation in FPGA;
FIG 7B illustrates a control Strategy for the AC/DC Converter;
FIG 8A illustrates a simplified model for conducted emissions in a three-phase system;
FIG 8B illustrates simulated spectral content of the common-mode voltage with zero common-mode modulation (left) and SPWM (right).

DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

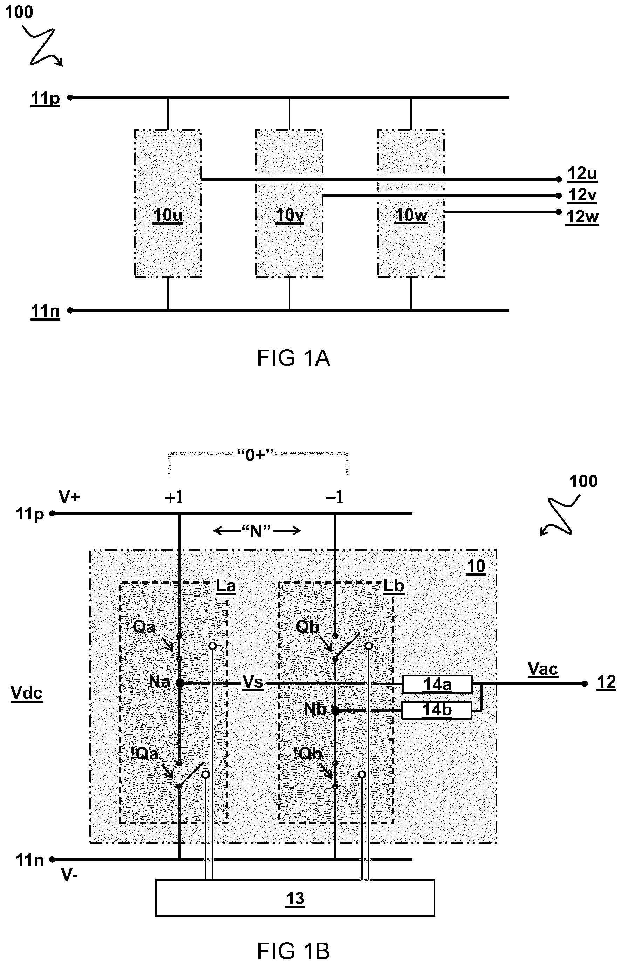

FIG 1A illustrates an AC/DC converter 100 configured to convert power between a set of DC terminals 11p, 11n and a set of AC terminals 12u,12v,12w, or vice versa, via respective circuits 10u,10v,10w there between. Typically, as shown here, the AC/DC converter has three AC terminals corresponding to three phases (U,V,W) of alternating current and/or voltage. Hence, the present device is referred to as a three-phase converter. In principle, the teachings described herein can also be applied if the number of phases is different than three, e.g. two, four, or five. In some embodiments, the converter is bidirectional. For example, the converter can be configured to convert AC input into DC output and/or configured to convert DC input into AC output. The latter is also referred to as an inverter.

FIG 1B illustrates a respective circuit 10 of one of the AC terminals 12. In a preferred embodiment, each AC terminal 12 of the set of AC terminals 12u,12v,12w is connected to an even number "N" of in parallel connected inverter legs La, Lb. In the present embodiment N=2, but it can also be envisaged that the number in parallel connected inverter legs is extended, e.g. N=4, N=6, et cetera. The larger the number of inverter legs, the more switching arrangements can be used. By using an even number in parallel connected inverter legs, the combined output may include zero volt output, e.g. by setting one half of the legs in opposite polarity to the other half.

In some embodiments, e.g. as shown, each inverter leg La or Lb comprises two switches (here denoted Qa, !Qa; Qb, !Qb). For example, the switches can be formed by MOSFETs. Preferably, the switches are connected in series between the DC terminals 11p, 11n. Accordingly, the connection to the AC terminal 12 can be formed via a central node "Na" between the two switches Qa, !Qa of the inverter leg La. Similar for the central node Nb between the switches Qb, !Qb. Typically, this connection is formed via a respective inductor 14a / 14b, or similar element, between the central node Na/Nb and the AC terminal 12.

Depending whether the switches are closed or open, a connection can be made or broken, respectively, between one of the DC terminals 11p or 11n and a respective central node Na. This is referred herein as a switching state. Typically, the switches can be set using a controller 13. It will be noted that in principle only two switching states will typically be used: either the first switch Qa is open and the second switch !Qa is closed, or vice versa. These switching states will be denoted here as +1 and -1, respectively. As further explained in the following, respective combinations of switching states of the two switches Qa, !Qa in the even number "N" of inverter legs of the AC terminal 12 determine a relation between a respective AC voltage Vac on the AC terminal 12 and respective DC voltages $V_{DC}$ on the DC terminals 11p, 11n.

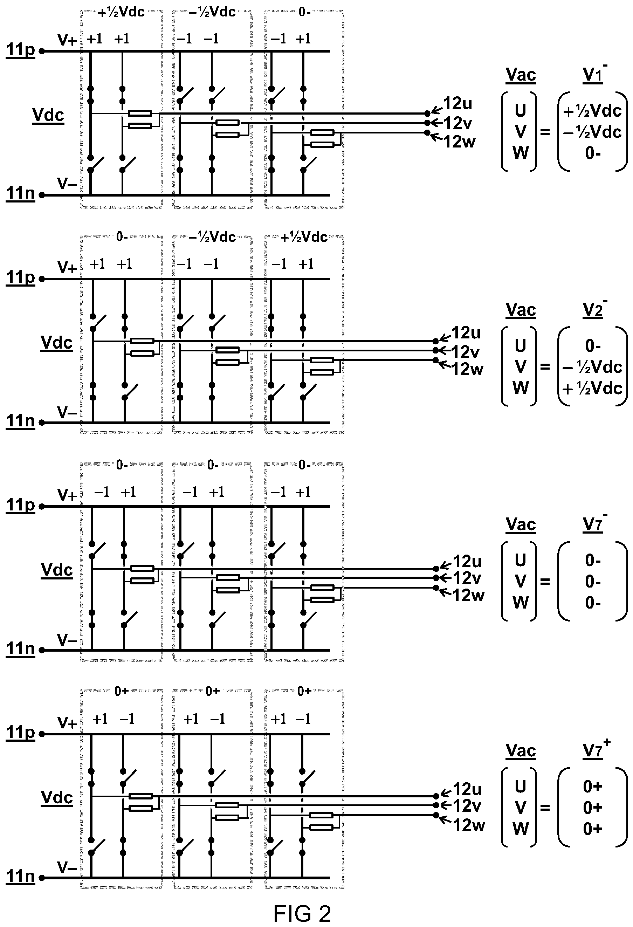

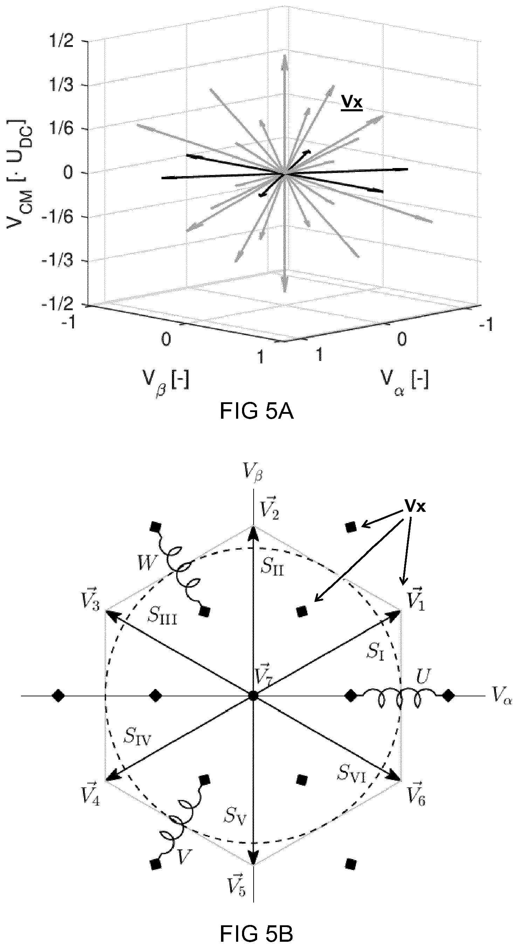

FIG 2 illustrates a representation of possible switching states providing different AC voltages for different phases (U,V,W). As illustrated, the respective combinations of switching states (+1,-1) for the even number ("N") of inverter legs La, Lb can be used provide an odd number ("L") of distinct voltage levels $+\frac{1}{2}V_{DC}$; $-\frac{1}{2}V_{DC}$; 0 for each AC terminal. As will be further discussed below, it will be noted that there are two way to provide a zero voltage on a respective AC terminal (denoted here as $0^+$ and $0^-$). Typically, the odd number "L" of distinct voltage levels is one more than the even number "N" of inverter legs, i.e. L=N+1 or N=L-1. The odd number "L" of distinct voltage levels $+\frac{1}{2}V_{DC}, -\frac{1}{2}V_{DC}$, 0 can be applied in different combinations for each of the phases, resulting in a total number of number "L^3" (the cube of the number L) of possible output vectors "Vx" whose components are defined by the voltage level for each of the AC terminals 12u,12v,12w. For example, FIGs 5A and 5B (discussed later) graphically illustrates all combinations of possible output vectors "Vx" for a three-phase system, while FIG 2 illustrates the subset of these output vectors V1,V2,V7.

Typically, the converter is configured to sequentially select respective combinations of the switching states +1,-1 in accordance with time-dependent AC voltages U,V,W to be applied to, or measured from, the respective AC terminals 12u,12v,12w. In a preferred embodiment, the respective combinations of switching states are sequentially selected (exclusively) from a set of zero common-mode vectors $V_1..V_7$ (some shown in FIG 2, others shown in FIG 5B). These zero common-mode vectors form a subset of the total number ("L^3") of possible output vectors Vx. In particular each zero common-mode vectors has a set of components, defined by the voltage level for each of the AC terminals 12u,12v,12w, adding up to zero. For example, in the first vector $V_1$: $(+\frac{1}{2}V_{DC}) + (-\frac{1}{2}V_{DC}) + (0) = 0$.

In some embodiments, one of the odd number "L" of distinct voltage levels is formed by a set of degenerate zero-volt levels $0^+, 0^-$. In one embodiment, the set of degenerate zero-volt levels $0^+, 0^-$ is formed by different combinations, e.g. permutations, +1,-1; -1,+1 of the switching states +1,-1. For example, a first degenerate zero-volt level $0^+$ can be formed by controlling the at least two switches Qa, !Qa in a first inverter leg La to connect a first central node Na of the first inverter leg La to a first DC terminal 11p providing a first voltage V+ on the first central node Na, and controlling the at least two switches Qb, !Qb in a second inverter leg Lb to connect a second central node Nb of the second inverter leg Lb to a second DC terminal 11n providing a second voltage V- on the second central node Nb. Here the first voltage "V+" and the second voltage "V-" add up to zero. To provide a second degenerate zero-volt level $0^-$, the switches can all be reversed. In one embodiment, e.g. as shown in FIG 1B, a first degenerate zero-volt level $0^+$ is formed by providing a positive first voltage V+ on the first central node Na and a negative second voltage V- on the second central node Nb. In another or further embodiment, a second degenerate zero-volt level 0- is formed by providing a negative second voltage V- on the first central node Na and a positive first voltage V+ on the second central node Nb. In principle, also more permutations of degenerate zero-volt level can be provided if the number of inverter legs is increased.

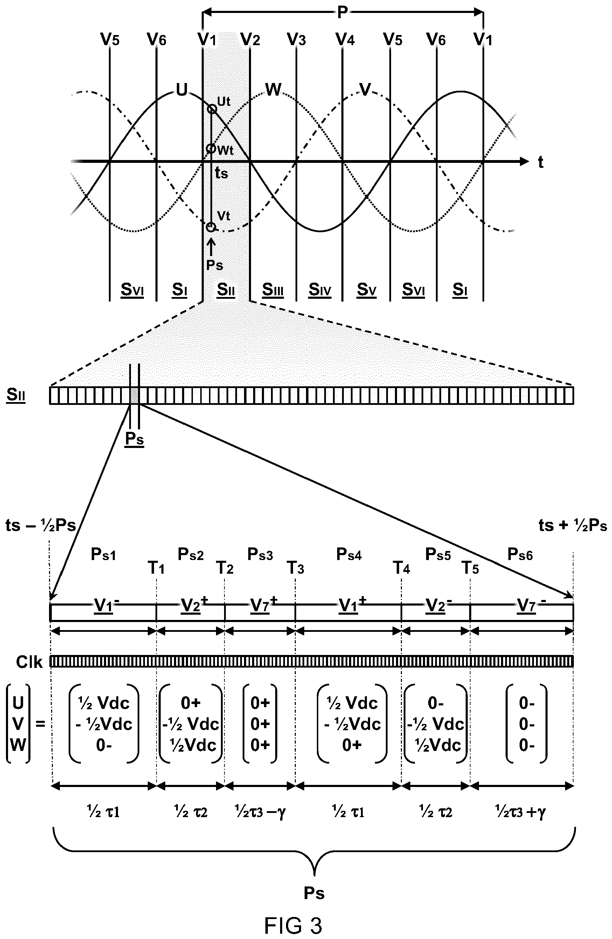

FIG 3 illustrates from top to bottom a period "P" of three-phase voltages U,V,W divided in sectors $S_I,...,S_{VI}$, each sector divided in switching periods Ps, each switching period divided in sub-period "Ps"$_1$, ..., $P_{s6}$, each sub-period defined by application of one of a set of zero common-mode vectors $V_1$ through $V_7$.

Typically, the AC voltages U,V,W are periodic as function of time "t". In some embodiments, each period P of the time-dependent AC voltages U,V,W is divided in a plurality of sectors $S_I,...,S_{VI}$. In other or further embodiments, each sector $S_{II}$ is divided in a plurality of switching periods $P_s$. In other or further embodiments, each switching period "Ps" is divided in a sequence of sub-periods $P_{s1},...,P_{s6}$. In a preferred embodiment, during each sub-period (e.g. $P_{s1}$) of the sequence of sub-periods $P_{s1},...,P_{s6}$ a respective vector (e.g. $V_1$) is selected from the set of zero common-mode vectors ($V_1 .. V_7$, e.g. illustrated in FIG 5B). Most preferably, during each sequence of sub-periods $P_{s1},...,P_{s6}$, a sequence of respective vectors (here: $V_1 \rightarrow V_2 \rightarrow V_7 \rightarrow V_1 \rightarrow V_2 \rightarrow V_7$) can be selected and applied during respective sub-periods $P_{s1}, ...,P_{s6}$ in accordance with a set of voltages (Ut,Vt,Wt) at a respective instance of time "ts" in the time-dependent AC voltages U,V,W coinciding with the respective switching period "Ps" (as shown e.g. in the top graph of FIG 3). For example, the instance of time "ts" can be any time during the switching period "Ps".

In some embodiments, e.g. as illustrated in FIG 3 bottom, for each sector $S_{II}$ of the plurality of sectors $S_I,...,S_{VI}$, the sequence of selected zero common-mode vectors $V_1 .. V_7$ comprises at least two linearly independent zero common-mode vectors $V_1$, $V_2$ (and possibly further vectors, in particular the zero vector $V_7$ described later) that combine to correspond to the respective sets of voltages (Ut,Vt,Wt), at respective instances of time "ts" where the time-dependent AC voltages U,V,W reside in that sector. The sectors are illustrated e.g. in FIG 3 top and FIG 5B.

In other or further embodiments, each switching period "Ps" (having possibly fixed or variable duration) is divided into a plurality of sub-periods $P_{s1},...,P_{s6}$. Each of the plurality of sub-periods $P_{s1},...,P_{s6}$ can have a variable duration $\tau1,\tau2,\tau3$ within the switching period "Ps". Preferably, the variable duration $\tau1,\tau2,\tau3$ is selected in accordance with a combination of respective common-mode vectors corresponding to a respective set of voltages Ut,Vt,Wt at a respective instance of time "ts" coinciding with the switching period "Ps". For example, voltage levels of the selected voltage vectors and/or the variable durations that these voltage vectors are applied during a respective switching period "Ps", average to form the set of voltages Ut,Vt,Wt at a respective instance of time "ts".

In a preferred embodiment, each of the variable durations $\tau1,\tau2,\tau3$ is divided over (at least) two sub-periods $P_{s1},...,P_{s6}$. Most preferably for each of the sub-periods, one of multiple degenerate zero common-mode vectors $V_1-,V_1+$ is applied to a respective AC terminal 12u,12v,12w. In one embodiment, each of the multiple degenerate zero common-mode vectors $V_1+,V_1-$ has a different degenerate zero-volt level $0^+,0-$ to balance application of each degenerate zero-volt level $0^+,0^-$ during each switching period "Ps". In another or further embodiment, each degenerate zero-volt level $0^+,0^-$ forming a component of a degenerate zero common-mode vectors $V_1+,V_1-$ is applied for the same amount of time during each switching period "Ps". While more complicated, it can also be envisaged to use more than two sub-periods adding up to a respective duration $\tau1,\tau2,\tau3$. For example, one or more of the sub-periods can be further subdivided.

In some embodiments, , for each sector Sn, the sequence of selected zero common-mode vectors $V_1 .. V_7$ is formed by (exactly) three different zero common-mode vectors $V_1, V_2, V_7$. In one embodiment, at least one of the zero common-mode vectors $V_1 .. V_7$ is a zero vector $V_7$ whose components are defined by (possibly degenerate) zero-volt levels $0^+, 0^-$ for each of the AC terminals 12u,12v,12w. In another or further embodiment, for each sector $S_I,...,S_{VI}$, the sequence of selected zero common-mode vectors $V_1 .. V_7$ comprises the zero vector $V_7$ to scale (e.g. normalize) voltages at the AC terminals 12u,12v,12w to correspond to the sets of voltages Ut,Vt,Wt at respective instances of time "ts". Most preferably, the (exact, or at least) three different zero common-mode vectors $V_1, V_2, V_7$ used in a respective sector include (at least) two linearly independent zero common-mode vectors $V_1, V_2$ and a zero vector $V_7$. While more complicated, it can also be envisaged to use three or more linearly independent zero common-mode vectors. For example, as may be inferred from FIG 5B, (weighted) combinations of the vectors $V_1 + V_2 + V_5$ and/or $V_1 + V_2 + V_4$ may also be used to reach desired voltages on the circle.

In some embodiments, a respective duration $\tau 3$, during which the zero vector $V_7$ is selected, is divided over at least two sub-periods $P_{s3}, P_{s6}$ into unequal parts according to a weight $\gamma$. For example, for each of the at least two sub-periods $P_{s3}, P_{s6}$ either the first degenerate zero-volt level $0^+$ or the second degenerate zero-volt level 0- is selected for all AC terminals 12u,12v,12w. Preferably, the weight $\gamma$ is determined for each phase to equalize current flow between the inverter legs La, Lb during a switching period "Ps". For example, the first sub-periods $P_{s3}$ lasts ($\frac{1}{2}\tau 3 + \gamma$) and the second sub-period "$Ps_6$" lasts ($\frac{1}{2}\tau 3 - \gamma$). Of course also other scaling of $\gamma$ can be used. The weight $\gamma$ can be also be a vector of weights which may adjust the respective sub-periods of the zero vector $V_7$ for each phase separately, e.g. switching $0^+$ to $0^-$, or vice versa, for one phase later than for another phase. Typically, these adjustments can be very subtle, e.g. up to five or ten percent of the switching period "Ps".

In some embodiments, selection of a respective degenerate zero-volt level $0^+, 0^-$ for applying to an AC terminal 12 during a respective sub-period is (additionally, or alternatively,) based on a degenerate zero-volt level $0^+, 0^-$ applied to the AC terminal 12 during a sub-period "Ps"$_1,...,P_{s6}$ (directly) preceding and/or following the respective sub-period. Preferably, the selection is based on minimizing switching events between subsequent sub-periods, e.g. when two subsequent vectors have a respective degenerate zero-volt level at a respective AC terminal 12u,12v,12w, the same degenerate zero-volt level is selected for the respective AC terminal for both vectors.

As shown in the top graph of FIG 3 for each transition between different sectors $S_I,...,S_{VI}$, one voltage (U, V, or W) of the time-dependent AC voltages crosses zero volt. In a preferred embodiment, at the zero volt crossing said one voltage is generated by a sequence of degenerate zero-volt levels $0^+, 0^-$ adapted to reduce a bias current between the in parallel connected inverter legs La, Lb. This will be further explained below in the section "Sector Transitions".

In some embodiments, the AC/DC converter 100 comprises a clock providing a clock signal Clk. Preferably, the clock signal Clk has a period which is shorter than the period P of the time-dependent AC voltages U,V,W, e.g. by at least a factor one thousand, ten thousand, hundred thousand, one million, or more. For example, the controller (as shown in FIG 1B) comprises a counter to count a fixed quantity of clock signal pulses, e.g. 2048, for each switching period "Ps". Accordingly, each sub-period can be formed by a variable quantity of the clock signal pulses, wherein the variable quantity of clock signal pulses per sub-period is determined based on a variable duration $\tau 1, \tau 2, \tau 3$ of respective sub-periods.

While embodiments have been described with reference to the AC/DC converter 100, other or further embodiments may relate to methods of using a converter as described herein to convert power from respective DC terminals 11p, 11n to respective AC terminals 12u,12v,12w, or vice versa. Aspects of the present disclosure can also be embodied as a (non-transitory) machine-readable medium storing a sequence of switching states selected from a set of zero common-mode vectors ($V_1 .. V_7$,), as described herein. For example, when this sequence processed by the controller 13 of the AC/DC converter 100 as described herein, this may cause the converter to convert power from respective DC terminals 11p, 11n to respective AC terminals 12u,12v,12w, or vice versa. For example, the machine-readable medium comprises a field programmable gate array (FPGA) or other computer/machine readable medium. Preferably, the sequence of switching states is configured to minimize switching events. The medium may also store other or further information, e.g. program information which can be executed by the controller 13 to perform operational acts as described herein. Also timing information can be stored on the medium and/or calculated by the controller / program. For example, the timing $\tau 1, \tau 2, \tau 3$ of the respective sub-periods $P_{s1},...,P_{s6}$ during which respective common mode vectors are applied, can be stored on the medium and/or calculated, e.g. depending on the phase. The control parameter $\gamma$ may also be stored and/or adapted by the controller based on (measured or modeled) current imbalances.

In the following, the invention will be further elucidated with reference to specific embodiments, theories, and results. Of course it will be understood that, while this elucidation may be illustrative for preferred aspects of the invention, the scope is not limited to any specific embodiment, theory, or result - only by the appended claims.

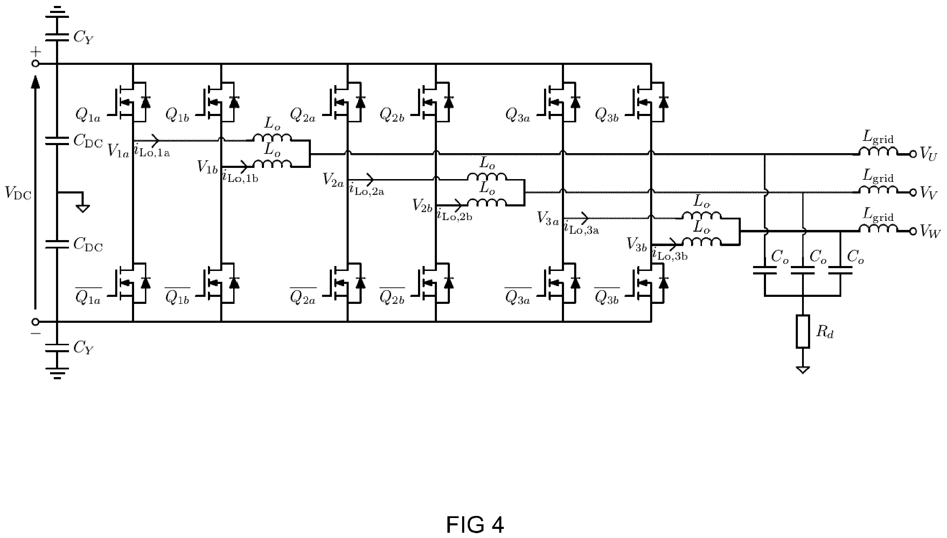

FIG 4 illustrates a more detailed schematic of a three-phase AC/DC converter with two interleaved legs per phase. The three phases are here indicated as "$V_U$", "$V_V$" and "$V_W$". Each phase consists of two interleaved legs that are formed by four switches, here denoted as $Q_{x,A}, \overline{Q_{x,A}}, Q_{x,B}$ and $\overline{Q_{x,B}}$ ; output filter inductors "Lo", filter capacitors "Co"

and grid coupling inductances "$L_{grid}$". Preferably, the total output current is evenly shared between the parallel legs, which can ease converter design for higher output powers. From a fundamental perspective it can be argued there is a close relation between classical series-connected multilevel topologies, such as the flying-capacitor, and the parallel interleaved topology. They both create multiple voltage levels at an increased ripple frequency at the output. In addition to the series-connected converter, the parallel interleaved converter also results in a multilevel current drawn from the DC-Link. However, the voltage stress on switches is higher compared to the series-connected converter. Nowadays, silicon carbide ("SiC") MOSFETs with blocking voltages of 1200V are available. With these semiconductors, the voltage stress is becoming less of an issue and parallel interleaving is gaining interest.

The two parallel interleaved legs can generate three different voltage levels, when enabling high-side switches $Q_{x,A}$ and $Q_{x,B}$, the generated voltage is equal to + ½$V_{DC}$. If the two low-side switches $\overline{Q_{x,A}}$ and $\overline{Q_{x,B}}$ are enabled, the output voltage is -½$V_{DC}$. The third option is enabling a high-side and low-side switch, e.g. $Q_{x,A}$ and $\overline{Q_{x,B}}$ or $\overline{Q_{x,A}}$ and $Q_{x,B}$, this yields an effective output voltage of 0. In order to distinguish the "zero"-states, enabling switch $Q_{x,A}$ and !$Q_{x,B}$ is defined as state 0⁺ and $Q_{x,B}$ and $\overline{Q_{x,A}}$ as 0⁻. Since the converter is operating in a three-phase system, there are 27 different switching states. Only 19 of these states are unique, the others can be generated in multiple ways. This is shown for an arbitrary number of distinct output voltage levels "L" in Table I.

**TABLE I**

VECTORS OF A MULTILEVEL THREE-PHASE AC/DC CONVERTER INCLUDING 0 COMMON-MODE VECTORS FOR AN ARBITRARY NUMBER OF VOLTAGE LEVELS

| # Switching Legs | Voltage Levels | Switching States | Unique Output Vectors | 0-CM vectors |
|---|---|---|---|---|
| 1 | 2 | 8 | 7 | 0 |
| 2 | 3 | 27 | 19 | 7 |
| 3 | 4 | 64 | 37 | 0 |
| 4 | 5 | 125 | 61 | 19 |
| 5 | 6 | 216 | 91 | 0 |
| 6 | 7 | 343 | 129 | 37 |
| L - 1 | L | $L^3$ | $L^3 - (L - 1)^3$ | $\frac{1}{4}(3L^2 + 1)^*$ |

**When L is odd, otherwise zero**

For the interleaved converter in FIG 4, seven common-mode voltage levels are identified: $\pm$½$V_{DC}$, $\pm$1/3$V_{DC}$, $\pm$1/6$V_{DC}$ and 0. All output vectors in the $\alpha\beta0$-framework, where 0 represents the common-mode part, are plotted in FIG 5A. It will be appreciated that the set of vectors having a common-mode voltage of zero can achieve a wide region of output voltages and also includes the "zero"-state. As described herein, the present modulation scheme uses this set of vectors. It may be noted that only converters that can generate an odd number of voltage levels per phase have a set of "0-CM" vectors as shown in Table I. Therefore, the present modulation scheme can be used in particular for interleaved and series connected multilevel inverters satisfying the odd-level criteria. This typically means that the number of switching legs N=L-1 is an even number.

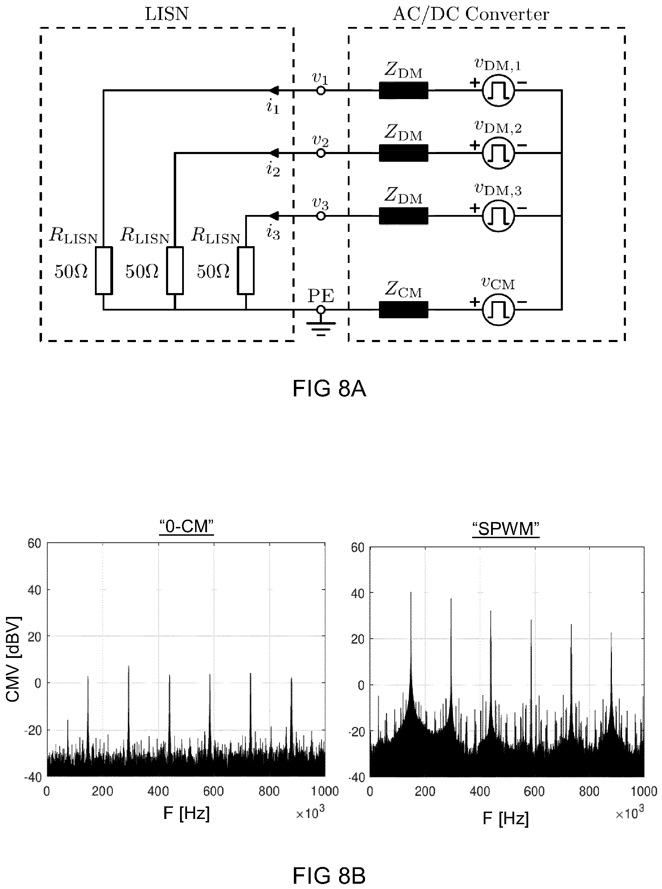

To gain insight in the noise generated by the AC/DC converter it is important to understand the disturbance sources. First the differential mode (DM) disturbance source is analyzed. Therefore the parallel interleaved inverters legs in FIG 4 are replaced by an equivalent lumped circuit as shown e.g. in FIG 8A. This results in a three-level voltage source with double the switching frequency. The effective output filter inductance is halved and the output capacitance remains unchanged. The virtual three-level voltage source is denoted as "$v_{DM,x}$" and the combination of filter inductor and capacitor can be denoted as "$Z_{DM}$". A piecewise-linear expression of the switching-node voltage can be found, which is a function of parameters such as the AC-voltage, grid frequency and DC-Link voltage. The Fourier series of the switching-node voltage can be used to determine the required attenuation of the output filter. Secondly, the CM disturbance source "$v_{CM}$" is defined as the average of all switching-node voltages:

$$v_{\mathrm{CM}} = \frac{V_{1a} + V_{1b} + V_{2a} + V_{2b} + V_{3a} + V_{3b}}{6} \qquad (1)$$

The impedance in the CM path "$Z_{CM}$" is dependent on parasitic inductances and an optional common-mode filter. Again the Fourier components can be calculated to estimate the voltage across the LISN' measurement resistors:

$$v_{\mathrm{LISN,CM}} = 20 \log_{10} \left\langle \frac{\mathcal{F}(v_{\mathrm{CM}})}{10^{-6} \cdot Z_{\mathrm{CM}}} \cdot 50\Omega \right\rangle \, [\mathrm{dB\mu V}] \qquad (2)$$

By decreasing the energy present in vCM and assuming $Z_{CM}$ constant for a given power converter, the resulting CM emission will be lower.

Space vector pulse width modulation "SVPWM" can be used to generate an arbitrary 3-phase output voltage. For example, this may focusing on reduction of the total harmonic distortion "THD" and computational requirements. The three-phase voltages "$V_U$", "$V_V$" and "$V_W$" can be represented in a stationary two-phase ($V\alpha$, $V\beta$) reference frame with the Clarke transform by:

$$\begin{bmatrix} V_\alpha \\ V_\beta \end{bmatrix} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} V_U \\ V_V \\ V_W \end{bmatrix} \qquad (3)$$

An assumption can be made that the converter is operating in a balanced three-phase network, i.e. $V_U + V_V + V_W = 0$. In a preceding section it was shown that for the interleaved three-phase AC/DC converter there exist seven vectors that generate zero common-mode voltage. These vectors can be normalized, e.g. with respect to $+\frac{1}{2}V_{DC}$ and are listed in Table II.

TABLE II
VECTORS WITH A COMMON-MODE VOLTAGE OF 0

| $\vec{V}_\#$ | $V_\alpha$ | $V_\beta$ | $V_U$ | $V_V$ | $V_W$ |
|---|---|---|---|---|---|
| $\vec{V}_1^\pm$ | 1 | $\dfrac{\sqrt{3}}{3}$ | 1 | -1 | $0^\pm$ |
| $\vec{V}_2^\pm$ | 0 | $\dfrac{2}{\sqrt{3}}$ | $0^\pm$ | -1 | 1 |
| $\vec{V}_3^\pm$ | -1 | $\dfrac{\sqrt{3}}{3}$ | -1 | $0^\pm$ | 1 |
| $\vec{V}_4^\pm$ | -1 | $-\dfrac{\sqrt{3}}{3}$ | -1 | 1 | $0^\pm$ |
| $\vec{V}_5^\pm$ | 0 | $-\dfrac{2}{\sqrt{3}}$ | $0^\pm$ | 1 | -1 |
| $\vec{V}_6^\pm$ | 1 | $-\dfrac{\sqrt{3}}{3}$ | 1 | $0^\pm$ | -1 |
| $\vec{V}_7^\pm$ | 0 | 0 | $0^\pm$ | $0^\pm$ | $0^\pm$ |

In FIG 5B the "0-CM" vectors are depicted in the stationary two-phase ($V\alpha$, $V\beta$) framework. Generating an arbitrary three-phase output voltage within the dashed circle is possible with the base vectors $V_1^\pm .. V_7^\pm$. The superscript

± indicates whether the zero voltage level in the vector is $0^+$ or a $0^-$ since these can be generated in different ways as explained earlier. By exclusively using this set of "0-CM" vectors the fundamental harmonic of the common-mode voltage can be eliminated. As the present modulation scheme does not use all available base vectors, the differential-mode THD may slightly deteriorate compared to the same converter that uses all switching states. The maximum modulation depth of the present modulation strategy can be identical to sinusoidal- PWM, being ½ $V_{DC}$.

In the following, the 0-CM modulator is discussed in more detail. First, mapping of an output vector onto available base vectors is described. Then, generation of the output vector is discussed including the used lookup tables. Also current balancing of the interleaved inverter legs is explained. Finally, implementation of the modulator into an FPGA is shown and simulation results are presented.

The current controller outputs a vector with coordinates Vα and Vβ. This output vector is divided by ½$V_{DC}$ to obtain the modulation indices mα and mβ, which is the modulator input. The modulator first determines the magnitude and angle of the input vector m:

$$\angle\vec{m} = \arctan\left(\frac{m_\beta}{m_\alpha}\right) \tag{4}$$

$$\|\vec{m}\| = \sqrt{m_\alpha^2 + m_\beta^2} \tag{5}$$

If the length ‖m‖ is larger than 1, the coordinates mα and mβ are recalculated without changing the angle and setting the vector length to 1. The vector "m" is located in one of the six sectors $S_I$....$S_{VI}$. Each sector, is spanned by two base vectors that are separated by 60 degrees. For example, sector $S_{II}$ is spanned by the base vectors $V_1$ and $V_2$. All sectors and base vectors are indicated in FIG 5B. Next, the desired output vector "m" can be written as a linear combination of two base vectors denoted by $V_X$ and $V_Y$:

$$\vec{m} = \tau_1 \vec{V}_X + \tau_2 \vec{V}_Y \tag{6}$$

In order to find the values τ1 and τ2, the following linear system can be solved:

$$V \qquad \vec{\tau} \quad = \quad \vec{u} \tag{7}$$

$$\begin{bmatrix} \vec{V}_X \cdot \vec{V}_X & \vec{V}_X \cdot \vec{V}_Y \\ \vec{V}_Y \cdot \vec{V}_X & \vec{V}_Y \cdot \vec{V}_Y \end{bmatrix} \begin{bmatrix} \tau_1 \\ \tau_2 \end{bmatrix} = \begin{bmatrix} \vec{m} \cdot \vec{V}_X \\ \vec{m} \cdot \vec{V}_Y \end{bmatrix} \tag{8}$$

The matrix V consists of the dot product of the base vectors with them self and the dot product of the two base vectors. The dot product is defined as:

$$\vec{a} \cdot \vec{b} = \|\vec{a}\| \|\vec{b}\| \cos(\theta) \tag{9}$$

where θ is the angle between vectors "a" and "b". Given that the length of all base vectors are identical and the angle between them is fixed, the matrix V is constant for each sector. Since the matrix V is invertible, the relative vectors lengths τ1 and τ2 can be calculated:

$$\vec{\tau} \quad = \quad V^{-1} \quad \vec{u} \tag{10}$$

$$\begin{bmatrix} \tau_1 \\ \tau_2 \end{bmatrix} = \begin{bmatrix} 1 & -\frac{1}{2} \\ -\frac{1}{2} & 1 \end{bmatrix} \begin{bmatrix} \vec{m} \cdot \vec{V}_X \\ \vec{m} \cdot \vec{V}_Y \end{bmatrix} \qquad (11)$$

As the length of input vector "m" is less or equal than 1, the sum of $\tau 1$ and $\tau 2$ is also smaller or equal to 1. Therefore, a third constant $\tau 3$ is defined:

$$\tau_3 = 1 - \tau_1 - \tau_2 \qquad (12)$$

During the period 3, the "zero" base vector $V_7$ is generated. The zero vector does not change the generated output vectors' angle, however it does ensure a constant switching frequency and can be used to balance the inductor currents in the interleaved phases. Thus, Eq. 6 is modified and results in:

$$\vec{m} = \tau_1 \vec{V}_X + \tau_2 \vec{V}_Y + \tau_3 \vec{V}_7 \qquad (13)$$

After the output vector "m" is mapped onto the base vectors, a sequence of these base vectors can be selected to generate the correct average output voltage in a switching period. Several sequences are analyzed until a sequence is found that complies with one one or more, preferably each, of the following criteria:

    1) Only "0-CM" vectors are used,
    2) Currents in the interleaved legs must be controllable,
    3) Minimize switching events in a switching period.

Without the first criterion the common-mode voltage can not be eliminated. Without the second criterion, current unbalances in the interleaved legs could occur because of component deviations, sudden changes in load currents or other disturbances. An "Alternating Zero Vector" modulation scheme alternates the used zero vector each switching period, consequently the ratio between both zero vectors is fixed at 50% and therefore the currents between the legs may not be controllable. The third criteria may decrease the switching losses of the converter to a minimum and guarantees a constant switching frequency.

Consider an arbitrary output voltage in sector $S_{II}$, which is formed by base vectors $V_1$, $V_2$ and $V_7$. Base vector $V_1$ generates $+\frac{1}{2}V_{DC}$ for phase "U", $-\frac{1}{2}V_{DC}$ for phase "V" and 0 in phase "W". Vector $V_2$ outputs 0 in phase U, $-\frac{1}{2}V_{DC}$ in phase "V" and $+\frac{1}{2}V_{DC}$ in phase "W". The vector $V_7$ results in 0 for all phases. Where 0 can be generated in two ways, enabling switch $Q_{x,A}$ and $!Q_{x,B}$ is defined as 0+ and $\overline{Q_{x,A}}$ and $Q_{x,B}$ as 0-.

In the next part some of the possible vector sequences are discussed:

    1) $V_1 \rightarrow V_2 \rightarrow V_7 \rightarrow V_7$:
    This option splits the period 3 (vector $V_7$) into two parts. The first time that $V_7$ is generated, the 0+ vector is used and the second time it uses the 0- vector. In this way, it is possible to balance the leg currents. However, every base vector $V_1$ ... $V_6$ also contains a degenerate "zero"-value (0+ or 0-) in one of the three phases. This additional "zero"-value typically imposes a bias and is preferably compensated by splitting $V_1$ and $V_2$ both into two parts. More importantly, it may generate more than one switching action in the phase that has the extra "zero"-value thus deteriorating criterion 3.
    2) $V_1 \rightarrow V_2 \rightarrow V_7 \rightarrow V_7 \rightarrow V_2 \rightarrow V_1$:
    By making the modulation scheme symmetrical, the first two criteria are satisfied. The base vectors $V_1$ and $V_2$ are split into two parts that both generate an equal amount of time the 0+ and 0- vectors. During period 3 it is possible to balance the interleaved inductor currents. It still does not satisfy the third criteria: no matter how the "zero"-vectors are arranged it results in more than one switching action during a switching period. This can be seen from the lookup table, to obtain only a single switching action per switching period, all 0+ -vectors are preferably arranged next to the other 0+ vectors and the same applies for the 0- vectors.
    3) $V_1 \rightarrow V_2 \rightarrow V_7 \rightarrow V_1 \rightarrow V_2 \rightarrow V_7$:
    By rearranging the vector sequence in the symmetrical modulation scheme it is possible to obtain a vector order that satisfies all three criteria. Still some care should be put in the order of "zero"-vectors. To ease current balancing, e.g. one $V_7$ uses always the 0+ vector and the other a 0- vector. The "zero"-values (0+,0-) in base vectors $V_1$ and

$V_2$ can be chosen such that there is only minimal switching action per switching period, e.g. by matching the "zero"-value in the base vectors $V_1$ and $V_2$, to the respective as zero value of an adjacent (preceding or succeeding) zero vector $V_7$. An example lookup table is shown in Table III (similar to FIG 3, bottom).

**TABLE III**

LOOKUP TABLE OF AN OUTPUT VECTOR IN SECTOR II

| Sector | Phase | $\vec{V_1}^-$ | $\vec{V_2}^+$ | $\vec{V_7}^+$ | $\vec{V_1}^+$ | $\vec{V_2}^-$ | $\vec{V_7}^-$ |
|---|---|---|---|---|---|---|---|
| II | U | | $0^+$ | $0^+$ | 1 | $0^-$ | $0^-$ |
| | V | 1 -1 | -1 | $0^+$ | -1 | -1 | $0^-$ |
| | W | $0^-$ | 1 | $0^+$ | $0^+$ | 1 | $0^-$ |
| | | $\dfrac{\tau_1}{2}$ | $\dfrac{\tau_2}{2}$ | $\dfrac{\tau_3}{2} - \gamma$ | $\dfrac{\tau_1}{2}$ | $\dfrac{\tau_2}{2}$ | $\dfrac{\tau_3}{2} + \gamma$ |

The lookup table divides the switching period into 6 parts. Starting at zero until period $\frac{1}{2}\tau 1$, next $\frac{1}{2}\tau 1$ till $\frac{1}{2}\tau 2$, etcetera. It contains a predefined sequences of switching states for each phase per sector where the length of each switching state is calculated accordingly. In the bottom column of the lookup table a control parameter "$\gamma$" for current balancing is introduced. This parameter uses the current difference in the two interleaved inductors to determine the ratio between $0^+$ and $0$. vectors, e.g. calculated as follows

$$\gamma = \left(i_{\mathrm{LxA}} - i_{\mathrm{LxB}}\right) \cdot \frac{K_{\mathrm{bal}}}{V_{\mathrm{DC}}} \qquad (14)$$

With a droop resistance $K_{\mathrm{bal}}$, the difference in current between the interleaved legs decreases slowly. During this period a circulating current flows through the two interleaved legs and the amplitude of this current increases with increasing DClink voltages. To reduce the sensitivity of the balancing loop, the droop-resistance $K_{\mathrm{bal}}$ is also scaled with respect to the DC-link voltage $V_{\mathrm{DC}}$.

In some embodiments, according to the lookup tables the switching pattern of the converter is constantly changing. Those switching patterns may stitch together seamlessly during sector transitions, except for the output that has a zero crossing of its phase voltage. All zero crossings of the phase voltages are aligned with the sector transitions. For example, as can be seen in the top graph of FIG 3, a sector transition from $S_{VI}$ to $S_I$ yields a zerovoltage crossing for phase "V" (dash-dotted line).

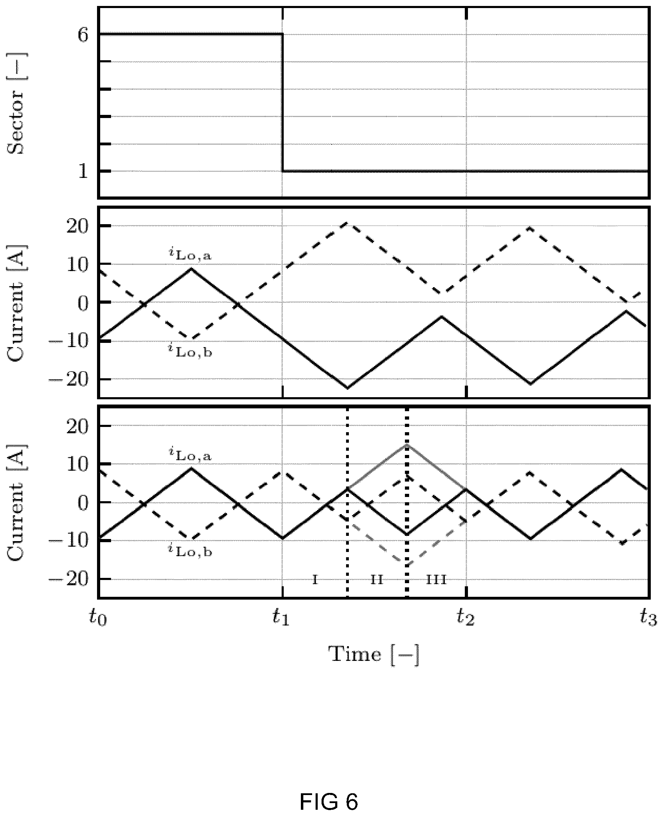

FIG 6 illustrates the inductor current waveforms in phase "V" for a sector transition from $S_{VI}$ to $S_I$. In the middle plot, the inductor currents are depicted when using the default lookup tables. A new switching period starts at time t0 and the switching patterns can be identified by the inductor currents at the start and end of a switching period. Before the sector transition, until t1, the inductor currents in a switching period start and end at its minimum and maximum value. After the sector transition, starting at t1, the inductor current does not start nor end at its minimum or maximum value. As a result a bias current in the interleaved legs is introduced which slowly decreases in the following switching periods due to the current balancing loop.

To obtain a smooth transition, i.e. without bias currents in the interleaved legs, the pulse patterns for the respective phase that has a zero-voltage crossing can be stitched together. In the bottom plot of FIG 6 the two pulse patterns are stitched together in the switching cycle from t1 to t2 by modifying the order and respective length of the zero-vectors. During this period, the converter is generating only $0^+$ and $0^-$ vectors since the switching occurs in the zero-voltage crossing. Altering zero-vectors is possible without compromising the 0-CM function. In the next part the modifications are explained which can be used to stitch the pulse patterns together. First, at time t1 in FIG 6, the complementary switches are enabled to change the direction of the inductor current slope. The length of this switching state (period I) is equal to either 1 or 2. As the modulator is on a sector transition one of the two 's is ideally zero. Next, in the periods II and III, both the $0^+$ and $0^-$ vectors are generated each 50% of the time. Whether a $0^+$ or $0^-$ vector is generated in period II determines the behavior as shown in the bottom plot of FIG 6 with the black and gray lines. If the switching state in period II is equal to the switching state in period I (gray lines), a small current spike occurs. The second option is adding an additional switching action as shown with the black lines, this prevents the current spike however this causes one additional switching cycle during a sector transition for the phase that crosses zero volts. Both options result in the same inductor current at time t2. After this modified pulse pattern, normal operation of the modulation scheme can be resumed until another sector transition takes place

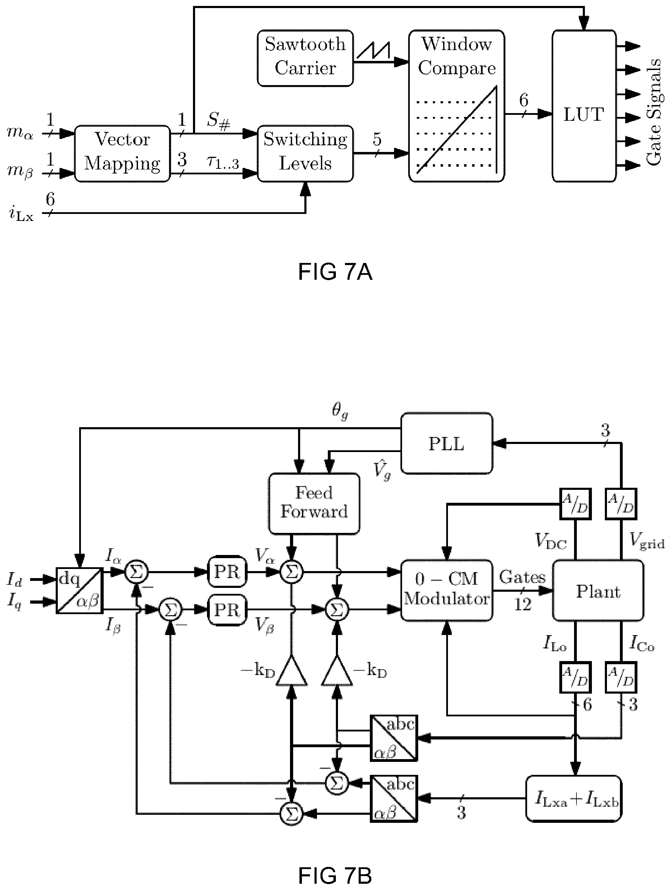

In some embodiments, the 0-CM modulator is implemented into a field-programmable gate array (FPGA). A top-level overview is depicted in FIG 7A. The modulator receives a modulation index setpoint and the measured average currents of the six inverter legs. The vector mapping block determines in which sector the vector "m" is located and calculates the relative vector lengths 1, 2 and 3. A sawtooth carrier is generated in the FPGA with a binary counter where the maximum count "Nmax" value determines the switching frequency:

$$f_{\text{sw}} = \frac{f_{\text{FPGA}}}{N_{\text{max}} + 1} \qquad (15)$$

In one embodiment, the FPGA runs at 150MHz and counts from 0 to 2047, resulting in a switching frequency of approximately 73.3kHz. In this modulation scheme, every switching period is divided into six sub-periods. These sub-periods are also indicated in the bottom row of Table III with their relative duration. The switching level block calculates the time instance when going from one sub-period to another with respect to the carrier signal. These switching times are indicated by $T_1 ... T_5$:

$$T_1 = \frac{1}{2} \cdot \tau_1 \cdot N_{\text{max}} \qquad (16)$$

$$T_2 = T_1 + \frac{1}{2} \cdot \tau_2 \cdot N_{\text{max}} \qquad (17)$$

$$T_3 = T_2 + (\frac{1}{2}\tau_3 - \gamma) \cdot N_{\text{max}} \qquad (18)$$

$$T_4 = T_3 + \frac{1}{2} \cdot \tau_1 \cdot N_{\text{max}} \qquad (19)$$

$$T_5 = T_4 + \frac{1}{2} \cdot \tau_2 \cdot N_{\text{max}} \qquad (20)$$

These switching levels are used by the window comparators in the next switching period. The window comparators determines in which sub-period the carrier signal is located and feeds this into the lookup table together with the sector number. The lookup table then determines the gate signals of all six switching legs. Dead time is added in another sub-block before the gate signals leave the FPGA to the gate drivers.

In practice, commutation of the switching node occurs either during the dead-time or just after the dead-time is finished. As a result, not all switching nodes of the inverter legs change simultaneously. Consequently, some common-mode voltage spikes are generated during these switching instances. Also, balancing of currents in interleaved legs generate some common-mode since for that specific phase having a current unbalance the switching times are slightly shifted. Therefore, it is preferred to choose the balancing gain $K_{\text{bal}}$ small such that there is a small convergence. The influence of deadtime and current unbalances due to variations in inductances are simulated in the following section.

To validate the present teachings, the present 0-CM modulator including vector mapping and lookup tables are implemented in Matlab Simulink and the three-phase bidirectional AC/DC converter is simulated in Plexim PLECS. Furthermore, a prototype is developed to validate the 0-CM modulator. Unless otherwise specified, the nominal values defined in Table IV are assumed in this section. First, the converter control strategy is explained as this is used in both simulation and measurements. Next, simulation results are shown including a comparison with respect to a sinusoidal PWM modulated converter. In the end experimental results are presented.

To synchronize the AC/DC converter to the mains utility grid and regulate the input current, additional control may be needed. For example, a synchronous reference frame phase-locked-loop "SRF-PLL" can be used for grid synchronization. This PLL acquires the grid angle $\theta g$ and peak grid voltage Vg based upon the measured three-phase voltages. A feed-forward estimates the grid voltages in the -framework to minimize inrush currents during startup. Control of the currents flowing through the grid coupling inductors is performed in the - framework. Therefore, proportional-resonant "PR" controllers are used since they achieve a high gain at its resonance frequency [15]. Additional harmonic compensators "HC" at multiples of the base frequency (e.g. 5th and 7th) can be added in parallel to reduce the current distortion [16]. Furthermore, the differential-mode "DM" resonance in the LCL-output filter is actively damped to increase efficiency without losing a filter order due to additional zero of a damping resistor. Since the converter was tested with a DC voltage source at the DC-Link side, no voltage controller was necessary. DC current setpoints in the synchronous reference frame are send to the converter, where the currents "$i$d" and "$i$q" respectively control the active and reactive power flow. An overview of the entire system is depicted in FIG 7B.

FIG 8A illustrates a simplified model for conducted emissions in a three-phase disturbance model. The DM disturbance sources are represented by sources $v_{DM,x}$ and the CM source is represented by $v_{CM}$. The LISN is modeled as three 50$\Omega$ resistors. It can be observed that DM noise currents flow through the phases, whereas the CM current returns via protective earth "PE".

FIG 8B illustrates a Fourier analysis of simulated common-mode voltage (CMV) as function of frequency (F) for different implementations. The simulations show advantageous results when comparing the generated common mode voltage of the present 0-CM modulator (left side graph) with sinusoidal PWM (right side graph). Both modulation strategies are applied to the same converter, i.e. two interleaved legs per phase in a three-phase AC/DC converter. Since the two legs are interleaved, the effective switching frequency is approximately 147kHz. The largest common-mode voltages are present at multiples of the effective switching frequency, e.g. 147, 293 and 440kHz. An improvement of 37dB is observed for the first spike and it decreases to 20dB at 880kHz. For very high frequencies, i.e. tens of MHz, both modulation strategies generate an equal amount of common-mode. At those frequencies, the amount of common-mode is determined by the slew rates of the common-mode voltages and not the width of the common-mode pulses. Return paths for these high frequency common-mode spikes could be kept within the converter by connecting Y-capacitors from the heatsink to the positive and negative DC-Link terminals. Nevertheless, a small common mode filter might be required for very high frequencies. As mentioned before, non-simultaneous changing switching nodes result in unintended common-mode voltages. Therefore, larger dead-time directly translate in a wider common-mode voltage spike. This effect has been analyzed, changing the dead-time by a factor of 5, from 100 to 500 nanoseconds, directly increases all CM spikes with almost 14dB. Therefore, it is important to minimize the dead-time to strict minimum that is required to prevent cross-conduction.

For the purpose of clarity and a concise description, features are described herein as part of the same or separate embodiments, however, it will be appreciated that the scope of the invention may include embodiments having combinations of all or some of the features described. For example, electronic components and circuitry may be combined or split up into one or more alternative components. The various elements of the embodiments as discussed and shown offer certain advantages, such as alleviating noise. Of course, it is to be appreciated that any one of the above embodiments or processes may be combined with one or more other embodiments or processes to provide even further improvements in finding and matching designs and advantages. In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise.

**Claims**

1. A three-phase AC/DC converter (100) configured to convert power between a set of DC terminals (11p, 11n) and a set of AC terminals (12u,12v,12w), or vice versa,
   wherein each AC terminal (12) of the set of AC terminals (12u,12v,12w) is connected to an even number ("N") of in parallel connected inverter legs (La, Lb), wherein each inverter leg (La) comprises two switches (Qa, !Qa) connected in series between the DC terminals (11p, 11n), wherein the connection to the AC terminal (12) is formed via a respective inductor (14a) connected to a central node (Na) between the two switches (Qa, !Qa) of the inverter leg (La), wherein respective combinations of switching states (+1,-1) of the two switches (Qa, !Qa) in the even number ("N")

of inverter legs of the AC terminal (12) determine a relation between a respective AC voltage (Vac) on the AC terminal (12) and respective DC voltages ($V_{DC}$) on the DC terminals (11p, 11n),

wherein the respective combinations of switching states (+1,-1) for the even number ("N") of inverter legs (La, Lb) provide an odd number ("L") of distinct voltage levels (+½$V_{DC}$; -½$V_{DC}$; 0) for each AC terminal, wherein different combinations of the odd number ("L") of distinct voltage levels (+½$V_{DC}$,-½$V_{DC}$,0) for all AC terminals provide a total number ("L^3") of possible output vectors (Vx) whose components are defined by the voltage level (+½$V_{DC}$; -½$V_{DC}$; 0) for each of the AC terminals (12u,12v,12w),

wherein the converter comprises a controller (13) configured to sequentially select respective combinations of the switching states (+1,-1) in accordance with time-dependent AC voltages (U,V,W) to be applied to, or measured from, the respective AC terminals (12u,12v,12w), wherein the respective combinations of switching states are sequentially selected from a set of zero common-mode vectors ($V_1..V_7$), forming a subset of the total number ("L^3") of possible output vectors (Vx), whose distinct components, defined by the voltage level (+½$V_{DC}$; -½$V_{DC}$; 0) for each of the AC terminals (12u,12v,12w), add up to zero.

2. The converter according to the preceding claim,
wherein the AC voltages (U,V,W) are periodic as function of time ("t"), wherein each period (P) of the time-dependent AC voltages (U,V,W) is divided in a plurality of sectors ($S_I,...,S_{VI}$),
wherein each sector ($S_{II}$) is divided in a plurality of switching periods ($P_s$),
wherein each switching period (Ps) is divided in a sequence of sub-periods ($P_{s1},...,P_{s6}$),
wherein, during each sub-period ($P_{s1}$) a respective vector ($V_1$) is selected from the set of zero common-mode vectors ($V_1..V_7$),
wherein during each sequence of sub-periods ($P_{s1},...,P_{s6}$), a sequence of respective vectors ($V_1,V_2,V_7,V_1,V_2,V_7$) is selected and applied during respective sub-periods ($P_{s1},...,P_{s6}$) in accordance with a set of voltages (Ut,Vt,Wt) at a respective instance of time (ts) in the time-dependent AC voltages (U,V,W) coinciding with the respective switching period (Ps).

3. The converter according to the preceding claim, wherein each switching period (Ps) is divided into a plurality of sub-periods ($P_{s1},...,P_{s6}$), wherein each of the plurality of sub-periods ($P_{s1},...,P_{s6}$) has a variable duration ($\tau1,\tau2,\tau3$) within the switching period (Ps), wherein the variable duration ($\tau1,\tau2,\tau3$) is selected in accordance with a combination of respective common-mode vectors corresponding to a respective set of voltages (Ut,Vt,Wt) at a respective instance of time (ts) coinciding with the switching period (Ps).

4. The converter according to the preceding claim, wherein each of the variable durations ($\tau1,\tau2,\tau3$) is divided over two sub-periods ($P_{s1},...,P_{s6}$), wherein for each of the sub-periods, one of multiple degenerate zero common-mode vectors ($V_1-,V_1+$) is applied to a respective AC terminal (12u,12v,12w), wherein each of the multiple degenerate zero common-mode vectors ($V_1+,V_1-$) has a different degenerate zero-volt level ($0^+,0-$) to balance application of each degenerate zero-volt level ($0^+,0-$) during each switching period (Ps).

5. The converter according to the preceding claim, wherein each degenerate zero-volt level ($0^+,0^-$) forming a component of a degenerate zero common-mode vectors ($V_1+,V_1-$) is applied for the same amount of time during each switching period (Ps).

6. The converter according to the preceding claim, wherein for each sector ($S_{II}$) of the plurality of sectors ($S_I,...,S_{VI}$), the sequence of selected zero common-mode vectors ($V_1..V_7$) comprises at least two linearly independent zero common-mode vectors ($V_1,V_2$) that combine to correspond to the respective sets of voltages (Ut,Vt,Wt), at respective instances of time (ts) where the time-dependent AC voltages (U,V,W) reside in that sector.

7. The converter according to the preceding claim, wherein, for each sector ($S_{II}$), the sequence of selected zero common-mode vectors ($V_1..V_7$) is formed by three different zero common-mode vectors ($V_1,V_2,V_7$).

8. The converter according to the preceding claim, wherein at least one of the zero common-mode vectors ($V_1 .. V_7$) is a zero vector ($V_7$) whose components are defined by zero-volt levels ($0^+,0^-$) for each of the AC terminals (12u,12v,12w).

9. The converter according to the preceding claim, wherein, for each sector ($S_I,...,S_{VI}$), the sequence of selected zero common-mode vectors ($V_1 .. V_7$) comprises the zero vector ($V_7$) to scale voltages at the AC terminals (12u,12v,12w) to correspond to the sets of voltages (Ut,Vt,Wt) at respective instances of time (ts).

10. The converter according to the preceding claim, wherein a respective duration ($\tau 3$), during which the zero vector ($V_7$) is selected, is divided over at least two sub-periods ($P_{s3}, P_{s6}$) into unequal parts according to a weight ($\gamma$), wherein for each of the at least two sub-periods ($P_{s3}, P_{s6}$) either the first degenerate zero-volt level ($0^+$) or the second degenerate zero-volt level (0-) is selected for all AC terminals (12u,12v,12w), wherein the weight ($\gamma$) is determined for each phase to equalize current flow between the inverter legs (La, Lb) during a switching period (Ps).

11. The converter according to any of the preceding claims, wherein selection of a respective degenerate zero-volt level ($0^+$,0-) for applying to an AC terminal (12) during a respective sub-period is based on a degenerate zero-volt level ($0^+$,0-) applied to the AC terminal (12) during a sub-period ($P_{s1},...,P_{s6}$) preceding and/or following the respective sub-period, wherein the selection is based on minimizing switching events between subsequent sub-periods.

12. The converter according to any of the preceding claims, wherein for each transition between different sectors ($S_I,...,S_{VI}$), one voltage (V) of the time-dependent AC voltages (U,V,W) crosses zero volt, wherein at the zero volt crossing said one voltage is generated by a sequence of degenerate zero-volt levels ($0^+$,0-) adapted to reduce a bias current between the in parallel connected inverter legs (La, Lb).

13. The converter according to the preceding claim, wherein a set of degenerate zero-volt levels ($0^+$,0-) is formed by different combinations (+1,-1; -1,+1) of the switching states, wherein a first degenerate zero-volt level ($0^+$) is formed by providing a positive first voltage (V+) on the first central node (Na) and a negative second voltage (V-) on the second central node (Nb), and a second degenerate zero-volt level (0-) is formed by providing a negative second voltage (V-) on the first central node (Na) and a positive first voltage (V+) on the second central node (Nb).

14. A non-transitory machine-readable medium storing a sequence of switching states selected from a set of zero common-mode vectors ($V_1 .. V_7$) which, when processed by the controller (13) of the AC/DC converter (100) according to any of the preceding claims, causes the converter to convert power between respective DC terminals (11p, 11n) and respective AC terminals (12u,12v,12w), or vice versa.

15. Use of the AC/DC converter (100) and/or machine-readable medium according to any of the preceding claims to convert power from respective DC terminals (11p, 11n) to respective AC terminals (12u,12v,12w), or vice versa.

100

11p

10u   10v   10w

12u
12v
12w

11n

FIG 1A

"0+"

V+   +1        −1        100

11p

←"N"→

10

La              Lb

Qa            Qb

Na      Vs            Vac   12

14a
Nb    14b

Vdc

!Qa           !Qb

11n
V−

13

FIG 1B

FIG 2

FIG 3

FIG 4

EP 4 084 309 A1

FIG 5A

FIG 5B

FIG 6

FIG 7A

FIG 7B

LISN                                     AC/DC Converter

$v_1$  $Z_{DM}$  $v_{DM,1}$

$i_1$

$v_2$  $Z_{DM}$  $v_{DM,2}$

$i_2$

$v_3$  $Z_{DM}$  $v_{DM,3}$

$R_{LISN}$  $R_{LISN}$  $R_{LISN}$  $i_3$

$50\Omega$  $50\Omega$  $50\Omega$

PE  $Z_{CM}$  $v_{CM}$

## FIG 8A

"0-CM"

"SPWM"

## FIG 8B

Europäisches
Patentamt

European
Patent Office

Office européen
des brevets

## EUROPEAN SEARCH REPORT

Application Number

EP 21 17 1182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANG DONG ET AL: "Common-Mode Voltage Reduction for Paralleled Inverters", IEEE TRANSACTIONS ON POWER ELECTRONICS, INSTITUTE OF ELECTRICAL AND ELECTRONICS ENGINEERS, USA, vol. 33, no. 5, May 2018 (2018-05), pages 3961-3974, XP011676858, ISSN: 0885-8993, DOI: 10.1109/TPEL.2017.2712369 [retrieved on 2018-02-05] * the whole document * | 1-15 | INV. H02M1/12 H02M7/23 H02M7/5387 H02M7/493 |
| A | ZENG ZHIYONG ET AL: "Optimal Discontinuous Space Vector PWM for Zero-Sequence-Circulating Current Reduction in Two Paralleled Three-Phase Two-Level Converter", IEEE TRANSACTIONS ON INDUSTRIAL ELECTRONICS, IEEE SERVICE CENTER, PISCATAWAY, NJ, USA, vol. 68, no. 2, 29 January 2020 (2020-01-29), pages 1252-1262, XP011817854, ISSN: 0278-0046, DOI: 10.1109/TIE.2020.2969068 [retrieved on 2020-11-03] * the whole document * | 10-12 | |
| X | CN 111 404 413 A (UNIV HUAZHONG SCIENCE TECH ET AL.) 10 July 2020 (2020-07-10) * the whole document * | 1-15 | TECHNICAL FIELDS SEARCHED (IPC)<br><br>H02M |

The present search report has been drawn up for all claims

| Place of search | Date of completion of the search | Examiner |
|---|---|---|
| The Hague | 19 September 2021 | Lochhead, Steven |

EPO FORM 1503 03.82 (P04C01)

**ANNEX TO THE EUROPEAN SEARCH REPORT
ON EUROPEAN PATENT APPLICATION NO.**

EP 21 17 1182

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2021

| Patent document cited in search report | Publication date | Patent family member(s) | Publication date |
|---|---|---|---|
| CN 111404413 A | 10-07-2020 | NONE | |